# EUROPÄISCHE PATENTSCHRIFT

(11) **EP 0 414 139 B1**
(45) Veröffentlichungstag und Bekanntmachung des Hinweises auf die Patenterteilung: **27.07.1994**
(21) Anmeldenummer: 90115759.4
(22) Anmeldetag: 17.08.1990
(51) Int. Cl.: H02J 13/00

(54) **Verfahren zur Synchronisierung der Sender mehrerer Sendestationen einer Rundsteuersendeanlage**
Method for synchronizing the transmitters of a plurality of transmitting stations of a ripple control transmitting installation
Méthode de synchronisation des émetteurs de plusieurs stations émettrices pour une installation d'émission de télécommande centralisée

(30) Priorität: 22.08.1989 DE 3927620
(43) Veröffentlichungstag der Anmeldung: 27.02.1991
(73) Patentinhaber: Asea Brown Boveri Aktiengesellschaft, 68309 Mannheim (DE)
(72) Erfinder: Dobberstein, Joachim, D-6805 Heddesheim (DE); Herr, Manfred, D-6804 Ilvesheim (DE); Bunten, Bertold, Dr., D-6940 Weinheim (DE)
(74) Vertreter: Rupprecht, Klaus, Dipl.-Ing.

(56) Entgegenhaltungen:
- BBC NACHRICHTEN 1977, DUISBURG Seiten 438 - 443; LANDAU ET AL.: 'Dritte Generation elektrischer Tonfrequenz-Rundsteuerempfänger'
- ABB DRUCKSCHRIFT NR. DSN 107688D Bd. 109, Nr. 5, 1988, LADENBURG Seiten 1 - 8;DOBBERSTEIN ET AL.: 'Rundsteuerzentrale RICONTIC RLZ 400 Neue Fähigkeiten und strukturen'

## Beschreibung

Die Erfindung bezieht sich auf ein Verfahren zur Übertragung von Datentelegrammen von einer Rundsteuerzentrale zu mehreren Unterstationen, die je einen Rundsteuersender enthalten, und zur Steuerung der Rundsteuersender um eine tastsynchrone Sendung eines tonfrequenten Rundsteuertelegramms zu erreichen.

In Stromversorgungsnetzen werden Rundsteuersysteme zur Steuerung von Verbrauchern eingesetzt. Ein Rundsteuersystem besteht aus einer zentralen Rundsteuersendeanlage und einer Vielzahl von Empfängern. Rundsteuersendeanlagen überlagern der Netzspannung tonfrequente Steuersignale, die als Rundsteuertelegramm bezeichnet werden. Die Einspeisung der Rundsteuertelegramme erfolgt in das Mittel- oder Hochspanungsnetz. Von dort gelangen die Rundsteuertelegramme in das Niederspannungsnetz, in welchem die Empfänger installiert sind. In den Empfängern werden die mit dem Rundsteuertelegramm übertragenen Schaltanweisungen ausgewertet und an die angeschlossenen Einrichtungen ausgegeben.

Eine Rundsteuersendeanlage kann aus einer Rundsteuerzentrale und mehreren Unterstationen bestehen, wobei die Unterstationen jeweils einen Rundsteuersender enthalten, der das Rundsteuertelegramm in das Mittel- oder Hochspannungsnetz mit einer typischen Leistung von beispielsweise 100 kVA einspeist. Das Rundsteuertelegramm kann dabei dezentral in den Unterstationen generiert werden. Ein Rundsteuerbefehl, der als Rundsteuertelegramm gesendet werden soll, wird in der Rundsteuerzentrale nach Gesichtspunkten der Lastführung festgelegt und zunächst als Datentelegramm von der Rundsteuerzentrale zu den Unterstationen übertragen.

Die dem Stromversorgungsnetz überlagerten tonfrequenten Impulse eines Rundsteuertelegramms müssen von allen Sendern der Unterstationen synchron eingespeist werden, damit beim vermaschten Betrieb bzw. beim Zusammenschalten unterschiedlicher Teilnetze der geforderte Spannungspegel erreicht wird. Der Spannungspegel ergibt sich aus der Summe der Teilströme der einzelnen Sender multipliziert mit dem Widerstand der Netzlast. Wenn eine oder mehrere Unterstationen das Datentelegramm der Rundsteuerzentrale nicht richtig empfangen haben und deshalb kein Rundsteuertelegramm senden, wird der für das sichere Ansprechen der Rundsteuerempfänger erforderliche Pegel nicht erreicht.

Aus den genannten Gründen ist es notwendig, für eine gesicherte Übertragung der Datentelegramme von der Rundsteuerzentrale zu den Unterstationen und für eine geeignete Steuerung der Rundsteuersender in den Unterstationen zu sorgen, um den gewünschten tastsynchronen Sendebetrieb zu gewährleisten.

Dieser Sachverhalt ist in der ABB-Druckschrift Nr. DSN 107688 D vom März 1988 mit dem Titel "Rundsteuerzentrale Ricontic RLZ 400 - Neue Fähigkeiten und Strukturen", insbesondere auf Seite 6 unter "Neue gesicherte Datenübertragung" beschrieben. Dort ist auch eine bekannte Anordnung und ein Verfahren zur Übertragung der Datentelegramme im Gemeinschaftsverkehr (Broadcast) (Befehl an alle) mit hoher Geschwindigkeit und gesichert von der Rundsteuerzentrale zu den Unterstationen angegeben. In umgekehrter Richtung besteht jeweils eine Punkt zu Punkt-Verbindung zwischen den Unterstationen und der Zentrale. Damit können auch zu Testzwecken Datentelegramme an die Unterstationen gesendet und der richtige Empfang der Datentelegramme rückgemeldet werden, wobei kein Rundsteuertelegramm generiert wird.

Rundsteuersysteme müssen zwar nicht mit absoluter Verläßlichkeit arbeiten, da mit Rundsteuerbefehlen keine sicherheitsrelevanten Schalthandlungen gesteuert werden; im Hinblick auf die erhebliche wirtschaftliche Bedeutung einer störungsfreien Lastdisposition soll jedoch ein möglichst hoher Zuverlässigkeitsgrad erreicht werden. Um zu erreichen, daß mit hoher Wahrscheinlichkeit alle Unterstationen das Datentelegramm auch bei kurzzeitigen Übertragungsstörungen richtig empfangen, wird beim bekannten Verfahren das Datentelegramm grundsätzlich zweimal nacheinander übertragen. Dies ist in Bild 5 der genannten Druckschrift dargestellt und im zugehörigen Text beschrieben. Die beiden Datentelegramme werden in einem exakt einzuhaltenden zeitlichen Abstand von einem echtzeitbetriebsfähigen Prozeßrechner nacheinander gesendet. Der Empfang des ersten und des zweiten Datentelegramms löst, entsprechend dem Zeitabstand zwischen den Datentelegrammen, unterschiedliche Verzögerungszeiten aus, nach deren Ablauf das tonfrequente Rundsteuertelegramm gesendet wird, auch wenn nur eines der Datentelegramme korrekt empfangen wurde.

Ausgehend von diesem bekannten Verfahren zur Datenübertragung von einer Rundsteuerzentrale zu Unterstationen liegt der Erfindung die Aufgabe zugrunde, das Verfahren in solcher Weise weiterzuentwickeln, daß keine Echtzeitfähigkeit eines steuernden Rechners zur Durchführung des Verfahrens erforderlich ist und somit beispielsweise ein üblicher Personal-Computer anwendbar ist.

Diese Aufgabe wird durch in den Patentansprüchen 1 und 2 angegebene Varianten eines Verfahren zur Übertragung von Datentelegrammen von einer Rundsteuerzentrale zu mehreren Unterstationen gelöst.

### Erste Variante:

Verfahren
- zur Übertragung von Datentelegrammen von einer Rundsteuerzentrale zu mehreren Unterstationen, die je einen Rundsteuersender enthalten und
- zur Steuerung der Rundsteuersender um eine tastsynchrone Sendung eines tonfrequenten Rundsteuertelegramms zu erreichen,
   a) wobei zunächst von der Rundsteuerzentrale ein erstes Datentelegramm im Gemeinschaftsverkehr zu allen Unterstationen übertragen wird und dort den Beginn einer Verzögerungsdauer auslöst, nach deren Ablauf die Sendung des Rundsteuertelegramms erfolgt,
   mit nachstehenden weiteren Schritten:
   b) nach Sendung des ersten Datentelegramms fordert die Rundsteuerzentrale die Unterstationen auf, den ordnungsgemäßen Empfang des ersten Datentelegramms zubestätigen (ja); wenn alle Unterstationen den Empfang bestätigen, erfolgt keine weitere Reaktion der Rundsteuerzentrale und nach Ablauf der Verzögerungsdauer wird das Rundsteuertelegramm gesendet;
   c) falls wenigstens eine der Unterstationen keine Bestätigung des Empfangs des ersten Datentelegramms meldet (nein), erfolgt nachstehender weiterer Ablauf:
      c1) die Rundsteuerzentrale sendet noch vor Ablauf der Verzögerungsdauer ein Widerruftelegramm, woraufhin in denjenigen Unterstationen, in denen die Verzögerungsdauer läuft, der Lauf der Verzögerungsdauer gelöscht wird,
      c2) die Rundsteuerzentrale sendet ein zweites Datentelegramm, das den Beginn der Verzögerungsdauer erneut auslöst,
      c3) die Rundsteuerzentrale fordert die Unterstationen auf, den ordnungsgemäßen Empfang des zweiten Datentelegramms zu bestätigen und unterläßt weitere Reaktionen, wenn sie von allen Unterstationen eine Bestätigung empfängt (ja), so daß nach Ablauf der Verzögerungsdauer die Sendung des Rundsteuertelegramms erfolgt;
   d) falls wenigstens eine der Unterstationen keine Bestätigung des Empfangs des zweiten Datentelegramms meldet (nein), sendet die Rundsteuerzentrale erneut ein Widerruftelegramm, woraufhin in den Unterstationen der Lauf der Verzögerungsdauer wieder gelöscht wird und somit keine Sendung des Rundsteuertelegramms erfolgt.

Bei einer nachstehenden zweiten Variante des Verfahrens wird auch der Empfang eines Widerruftelegramms von der Rundsteuerzentrale abgefragt:
Verfahren
- zur Übertragung von Datentelegrammen von einer Rundsteuerzentrale zu mehreren Unterstationen, die je einen Rundsteuersender enthalten und
- zur Steuerung der Rundsteuersender um eine tastsynchrone Sendung eines tonfrequenten Rundsteuertelegramms zu erreichen,
   A) wobei zunächst von der Rundsteuerzentrale ein Datentelegramm im Gemeinschaftsverkehr zu allen Unterstationen übertragen wird und dort den Beginn einer Verzögerungsdauer auslöst, nach deren Ablauf die Sendung des Rundsteuertelegramms erfolgt, mit nachstehenden weiteren Schritten:
   B) nach Sendung des Datentelegramms fordert die Rundsteuerzentrale die Unterstationen auf, den ordnungsgemäßen Empfang des Datentelegramms zu bestätigen; wenn alle Unterstationen den Datentelegramm-Empfang bestätigen (ja), erfolgt keine weitere Reaktion der Rundsteuerzentrale und nach Ablauf der Verzögerungsdauer wird das Rundsteuertelegramm gesendet;
   C) falls wenigstens eine der Unterstationen keine Bestätigung des Empfangs des Datentelegramms meldet (nein), erfolgt nachstehender weiterer Ablauf:
      C1) die Rundsteuerzentrale sendet noch vor Ablauf der Verzögerungsdauer ein Widerruftelegramm, woraufhin in denjenigen Unterstationen, in denen die Verzögerungsdauer läuft, der Lauf der Verzögerungsdauer gelöscht wird,
      C2) die Rundsteuerzentrale fordert die Unterstationen auf, den ordnungsgemäßen Empfang des Widerruftelegramms zu bestätigen,
   D) wenn alle Unterstationen den Empfang des Widerruftelegramms bestätigen (ja), prüft die Zentrale, ob eine vorgegebene Zeitspanne erreicht ist, falls die vorgegebene Zeitspanne noch nicht erreicht ist (nein), folgt eine Wiederholung des Sendeversuchs durch Sendung eines Datentelegramms (Schritt A) und des Abfrageschritts B; falls die vorgegebene Zeitspanne erreicht ist (ja), erfolgt ein Abbruch des Sendeversuchs;
   E) wenn wenigstens eine der Unterstationen keine Bestätigung des Empfangs des Widerruftelegramms meldet (Ergebnis "nein" im Schritt C2), prüft die Rundsteuerzentrale, ob die Verzögerungsdauer abgelaufen ist; falls die Verzögerungsdauer abgelaufen ist (ja), erfolgt ein Abbruch des Sendeversuchs, falls die Verzögerungsdauer noch nicht abgelaufen ist (nein), erfolgt eine Wiederholung der Schritte C und D, also eine wiederholte Sendung eines Widerruftelegramms.

Nach einer vorteilhaften Ausgestaltung zu beiden Verfahrensvarianten ist eine Störungsmeldung nach einem erfolglosen Abbruch des Sendeversuchs vorgesehen.

Ein wesentlicher Vorteil der Erfindung besteht darin, daß ein üblicher Personal-Computer verwendet werden kann, der nicht die Fähigkeit eines Echtzeitbetriebsrechners aufweist und dem diese Fähigkeit auch nicht durch eine nachgeschaltete Interface-Einrichtung verliehen werden muß. Dies wird dadurch ermöglicht, daß das Verfahren keine festen Zeitabstände zwischen wiederholt gesendeten Datentelegrammen erfordert. Der zeitliche Abstand zwischen einer gestörten ersten Übertragung eines Datentelegramms und dem Empfang eines Widerruftelegramms muß lediglich kürzer sein als die Verzögerungsdauer. Während dieser Verzögerungsdauer muß also die Abfrage des ordnungsgemäßen Empfangs des Datentelegramms, die Übertragung eines Widerruftelegramms die Abfrage des Empfangs des Widerruftelegramms und ggfs. eine wiederholte Sendung des Widerruftelegramms erfolgen.

Außerdem dürfen die zeitlichen Abstände zwischen Zweifach- oder Mehrfach-Übertragungen der Datentelegramme bei jedem Rundsteuertelegramm-Sendevorgang, also beim Senden zu unterschiedlichen Tageszeiten, variieren.

Die erforderliche Verzögerungsdauer läßt sich anhand des folgenden Beispiels abschätzen. Wenn die Übertragung mit einer Geschwindigkeit von 200 Bd erfolgt und ein Datentelegramm 100 Bit umfaßt, dauert die Übertragung eines Datentelegramms 500 ms. Wenn man für Abfrage- und Antworttelegramme auf 50 Bit verkürzte Telegramme verwendet und wenn man unterstellt, daß 10 Unterstationen nacheinander abzufragen sind, sind dafür 5 Sekunden erforderlich. Die Gesamtzeit zur Feststellung einer ungestörten Übertragung beträgt somit 5,5 s. Wird bei gestörter Übertragung ein Widerruftelegramm erforderlich und wird dessen Empfang ebenfalls abgefragt, so sind weitere 5,5 s erforderlich, also zusammen 11 s. Unterstellt man, daß auch die Übertragung des Widerruftelegramms gestört war und ein weiteres Widerruftelegramm vor Ablauf der Verzögerungsdauer in der Unterstation eintreffen soll, so wäre eine Verzögerungsdauer von 12 s geeignet. Bei höherer Baudrate oder kleinerer Stationszahl verkürzt sich die erforderliche Verzögerungsdauer entsprechend.

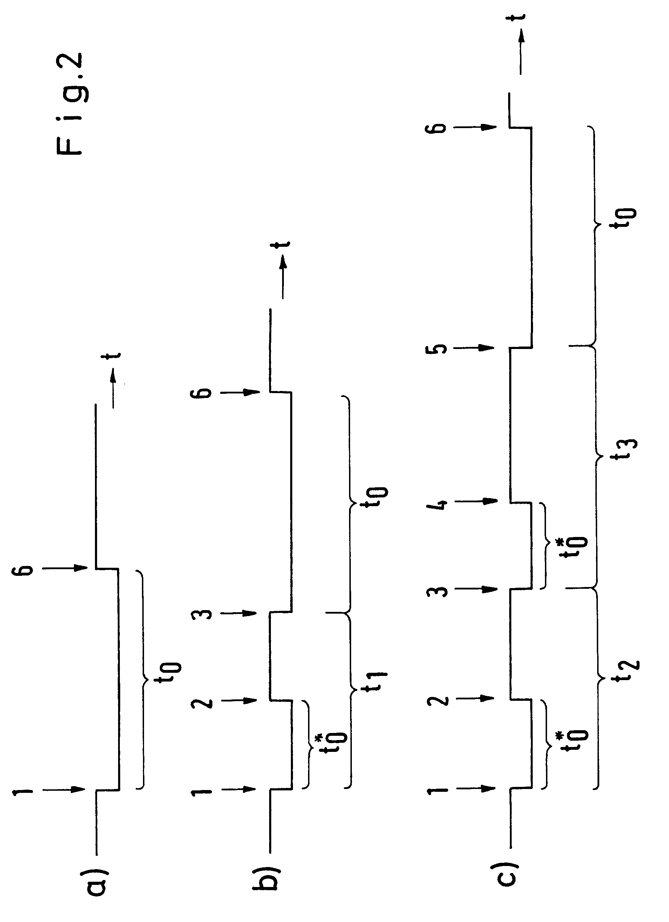

Das Verfahren wird nachstehend anhand der Zeichnung beschrieben, wobei die Fig. 1a bis 1c das Verfahren als Funktionsplan zeigen und in Fig. 2 schematisch Beispiele für mögliche Verfahrensabläufe dargestellt sind.

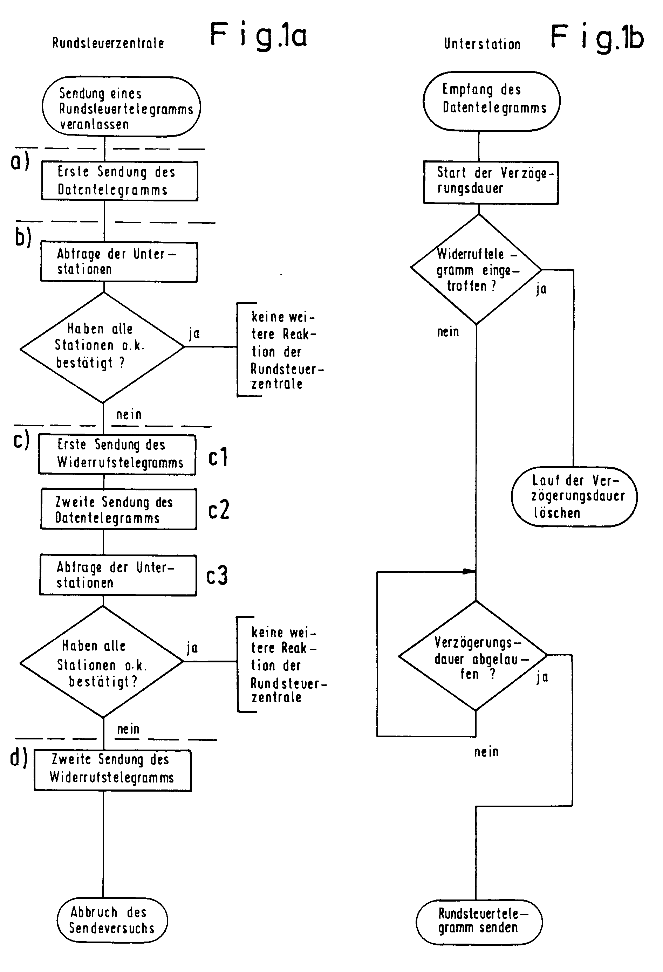

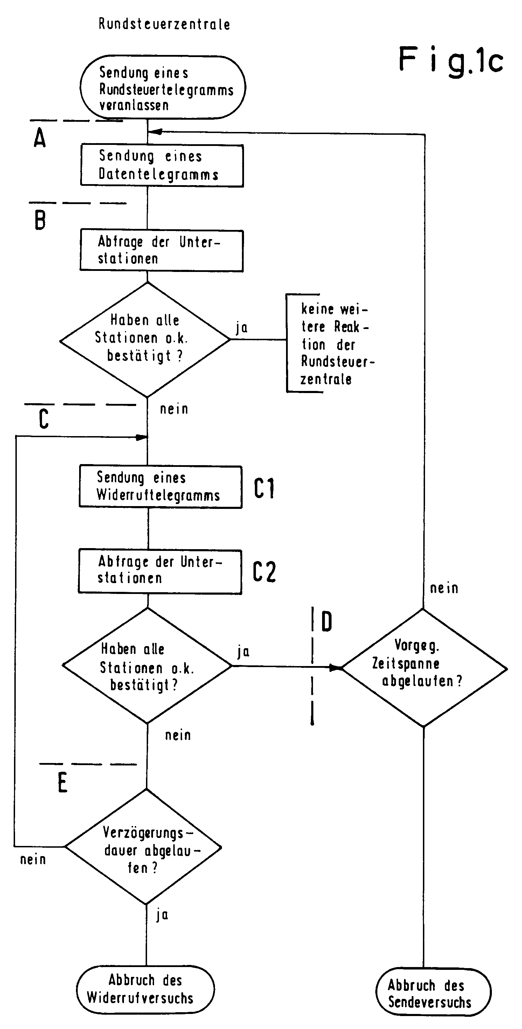

Im Funktionsplan nach Fig. 1a ist der Verfahrensablauf in der Rundsteuerzentrale gemäß der ersten Verfahrensvariante dargestellt und daneben in Fig. 1b der entsprechende Ablauf in den Unterstationen. Der in Fig. 1b dargestellte Ablauf in den Unterstationen gilt auch für die zweite Variante, deren Funktionsablauf in der Zentrale in Fig. 1c gezeigt ist.

Wenn in der Rundsteuerzentrale die Sendung eines Rundsteuertelegramms veranlaßt wird, erfolgt zunächst eine erste Sendung des Datentelegramms zu den Unterstationen (Schritt a in Fig. 1a).

In den Unterstationen löst der Empfang eines Datentelegramms die Einschaltung des Rundsteuersenders aus. Das bedeutet, daß im Sender Kondensatoren aufgeladen werden und der Sender in einen betriebsbereiten Zustand versetzt wird. Eine Abschaltung des Senders erfolgt nach jedem Widerruf des Datentelegramms und nach jeder Aussendung des Rundsteuertelegramms.

Der Empfang eines Datentelegramms löst in den Unterstationen außerdem den Start einer Verzögerungszeit aus, nach deren Ablauf auf der Grundlage des Datentelegramms ein entsprechendes Rundsteuertelegramm generiert und vom Rundsteuersender gesendet wird.

Nach Sendung des Datentelegramms an die Unterstationen fragt die Rundsteuerzentrale in einem Abfragezyklus (Schritt b in Fig. 1a) die Unterstationen nacheinander ab, ob das Datentelegramm empfangen wurde. Melden alle Unterstationen eine Empfangsbestätigung (ja), so unterbleibt eine weitere Reaktion der Rundsteuerzentrale und die Unterstationen generieren und senden nach Ablauf der Verzögerungsdauer das Rundsteuertelegramm.

Dieser störungsfreie Ablauf ist in Fig. 2 als Beispiel a) dargestellt. Im Beispiel a) erfolgt zum Zeitpunkt 1 der Empfang des Datentelegramms und nach Ablauf der Verzögerungsdauer tₒ zum Zeitpunkt 6 die Generierung und Sendung des Rundsteuertelegramms.

Ergibt dagegen die Abfrage der Rundsteuerzentrale, daß wenigstens eine der Unterstationen keinen Empfang (nein) des Datentelegramms bestätigt (vergleiche erste Verzweigungsstelle im Flußplan der Zentrale in Fig. 1a), so sendet die Rundsteuerzentrale ein erstes Widerruftelegramm (Schritt c1), das in den Unterstationen die Löschung der laufenden Verzögerungsdauer bewirkt (vergleiche erste Verzweigungstelle im Flußplan der Unterstation in Fig. 1b). Daraufhin erfolgt eine zweite Sendung des Datentelegramms (Schritt c2 in Fig. 1a), woraufhin in den Unterstationen erneut die Verzögerungsdauer startet. Daran schließt sich wieder eine Abfrage (Schritt c3 in Fig. 1a) des Empfangs der zweiten Sendung des Datentelegramms durch die Rundsteuerzentrale an und es erfolgt der weitere Ablauf wie zuvor für die erste Übertragung des Datentelegramms beschrieben, d.h. entweder keine weitere Reaktion der Zentrale oder Sendung eines Widerruftelegramms (Schritt d in Fig. 1a) zum Abschluß eines vergeblichen Sendeversuchs. Der vergebliche Sendeversuch kann als Störung gemeldet werden.

In Fig. 2 ist als zweites Beispiel b) eine zuvor beschriebene gestörte Übertragung eines ersten Datentelegramms zum Zeitpunkt 1 dargestellt, wobei zu einem Zeitpunkt 2 ein Widerruftelegramm übertragen wird, das zur Löschung des Laufs der Verzögerungsdauer führt. Die dadurch auf die Dauer tₒ* gekürzte Verzögerungsdauer löst keine Sendung des Rundsteuertelegramms aus. Zu einem Zeitpunkt 3 trifft das zweite Datentelegramm ein. Im dargestellten Beispiel b) wird unterstellt, daß dieses zweite Datentelegramm von allen Unterstationen richtig empfangen wird, so daß kein Widerruf erfolgt und zum Zeitpunkt 6 die Generierung und Sendung des Rundsteuertelegramms erfolgen kann.

In Fig. 2 ist als Beispiel c) ein Fall dargestellt, in welchem zu einem Zeitpunkt 3 ein zweites Datentelegramm gesendet wird, das nach einer Abfrage und einer fehlenden Bestätigung zum Zeitpunkt 4 widerrufen wird. Der Empfang des Widerruftelegramms wird ordnungsgemäß bestätigt, so daß zum Zeitpunkt 5 ein drittes Mal ein Datentelegramm gesendet wird, das als in allen Stationen richtig empfangen bestätigt wird. Nach Ablauf der Verzögerungsdauer tₒ wird dann schließlich zum Zeitpunkt 6 des Rundsteuertelegramm generiert und gesendet.

In den in Fig. 2 dargestellten Beispielen b) und c) sind Zeitabschnitte t₁ bis t₃ angegeben, die jeweils zwischen der Sendung von Datentelegrammen liegen. Es ist im Hinblick auf die Eignung von Rechnern von Bedeutung, daß die Zeitabschnitte t₁, t₂ und t₃ unterschiedlich und auch verschieden von der Dauer tₒ sein dürfen.

Fig. 1b zeigt den Funktionsablauf in der Rundsteuerzentrale im Falle der zweiten Verfahrensvariante. Die Schritte A (Sendung eines Datentelegramms), B (Abfrage der Unterstationen) und C1 (Sendung eines Widerruftelegramms) entsprechend den Schritten a bis c1 in Fig. 1a. Bei der zweiten Variante schließt sich jedoch ein Abfragezyklus (C2) an, in welchem der Empfang des Widerruftelegramms abgefragt wird. Wird der Empfang bestätigt (ja), so wird in einem Schritt D geprüft, ob eine vorgegebene Zeitspanne abgelaufen ist. Diese Zeitspanne ist aus betrieblichen Gründen zur Begrenzung der Sendeversuche vorgesehen. Ist die Zeitspanne noch nicht abgelaufen (nein), so erfolgt eine Wiederholung des Schritts A und der folgenden Schritte. Falls die Zeitspanne abgelaufen ist (ja) erfolgt der Abbruch des Sendeversuchs.

Wird der Empfang des Widerruftelegramms im Abfragezyklus C2 einer Unterstation nicht bestätigt (nein), so wird in einem Schritt E geprüft, ob eine Wiederholung der Sendung des Widerruftelegramms sinnvoll ist. Dies ist der Fall, solange in den Unterstationen eine in Gang gesetzte Verzögerungsdauer noch nicht abgelaufen ist. Wenn die Verzögerungsdauer abgelaufen ist, erfolgt ein Abbruch des Veruchs, die Sendung eines Rundsteuertelegramms zu verhindern. Anderenfalls erfolgt eine Wiederholung der Schritte C1 und C2.

## Patentansprüche

1. Verfahren
- zur Übertragung von Datentelegrammen von einer Rundsteuerzentrale zu mehreren Unterstationen, die je einen Rundsteuersender enthalten und
- zur Steuerung der Rundsteuersender um eine tastsynchrone Sendung eines tonfrequenten Rundsteuertelegramms zu erreichen,
a) wobei zunächst von der Rundsteuerzentrale ein erstes Datentelegramm im Gemeinschaftsverkehr zu allen Unterstationen übertragen wird und dort den Beginn einer Verzögerungsdauer auslöst, nach deren Ablauf die Sendung des Rundsteuertelegramms erfolgt,
gekennzeichnet durch nachstehende weitere Schritte:
b) nach Sendung des ersten Datentelegramms fordert die Rundsteuerzentrale die Unterstationen auf, den ordnungsgemäßen Empfang des ersten Datentelegramms zubestätigen (ja); wenn alle Unterstationen den Empfang bestätigen, erfolgt keine weitere Reaktion der Rundsteuerzentrale und nach Ablauf der Verzögerungsdauer wird das Rundsteuertelegramm gesendet;
c) falls wenigstens eine der Unterstationen keine Bestätigung des Empfangs des ersten Datentelegramms meldet (nein), erfolgt nachstehender weiterer Ablauf:
c1) die Rundsteuerzentrale sendet noch vor Ablauf der Verzögerungsdauer ein Widerruftelegramm, woraufhin in denjenigen Unterstationen, in denen die Verzögerungsdauer läuft, der Lauf der Verzögerungsdauer gelöscht wird,
c2) die Rundsteuerzentrale sendet ein zweites Datentelegramm, das den Beginn der Verzögerungsdauer erneut auslöst,
c3) die Rundsteuerzentrale fordert die Unterstationen auf, den ordnungsgemäßen Empfang des zweiten Datentelegramms zu bestätigen und unterläßt weitere Reaktionen, wenn sie von allen Unterstationen eine Bestätigung empfängt (ja), so daß nach Ablauf der Verzögerungsdauer die Sendung des Rundsteuertelegramms erfolgt;
d) falls wenigstens eine der Unterstationen keine Bestätigung des Empfangs des zweiten Datentelegramms meldet (nein), sendet die Rundsteuerzentrale erneut ein Widerruftelegramm, woraufhin in den Unterstationen der Lauf der Verzögerungsdauer wieder gelöscht wird und somit keine Sendung des Rundsteuertelegramms erfolgt.

2. Verfahren
- zur Übertragung von Datentelegrammen von einer Rundsteuerzentrale zu mehreren Unterstationen, die je einen Rundsteuersender enthalten und
- zur Steuerung der Rundsteuersender um eine tastsynchrone Sendung eines tonfrequenten Rundsteuertelegramms zu erreichen,
A) wobei zunächst von der Rundsteuerzentrale ein Datentelegramm im Gemeinschaftsverkehr zu allen Unterstationen übertragen wird und dort den Beginn einer Verzögerungsdauer auslöst, nach deren Ablauf die Sendung des Rundsteuertelegramms erfolgt,
gekennzeichnet durch nachstehende weitere Schritte:
B) nach Sendung des Datentelegramms fordert die Rundsteuerzentrale die Unterstationen auf, den ordnungsgemäßen Empfang des Datentelegramms zu bestätigen; wenn alle Unterstationen den Datentelegramm-Empfang bestätigen (ja), erfolgt keine weitere Reaktion der Rundsteuerzentrale und nach Ablauf der Verzögerungsdauer wird das Rundsteuertelegramm gesendet;
C) falls wenigstens eine der Unterstationen keine Bestätigung des Empfangs des Datentelegramms meldet (nein), erfolgt nachstehender weiterer Ablauf:
C1) die Rundsteuerzentrale sendet noch vor Ablauf der Verzögerungsdauer ein Widerruftelegramm, woraufhin in denjenigen Unterstationen, in denen die Verzögerungsdauer läuft, der Lauf der Verzögerungsdauer gelöscht wird,
C2) die Rundsteuerzentrale fordert die Unterstationen auf, den ordnungsgemäßen Empfang des Widerruftelegramms zu bestätigen,
D) wenn alle Unterstationen den Empfang des Widerruftelegramms bestätigen (ja), prüft die Zentrale, ob eine vorgegebene Zeitspanne erreicht ist, falls die vorgegebene Zeitspanne noch nicht erreicht ist (nein), folgt eine Wiederholung des Sendeversuchs durch Sendung eines Datentelegramms (Schritt A) und des Abfrageschritts B; falls die vorgegebene Zeitspanne erreicht ist (ja), erfolgt ein Abbruch des Sendeversuchs;
E) wenn wenigstens eine der Unterstationen keine Bestätigung des Empfangs des Widerruftelegramms meldet (Ergebnis "nein" im Schritt C2), prüft die Rundsteuerzentrale, ob die Verzögerungsdauer abgelaufen ist; falls die Verzögerungsdauer abgelaufen ist (ja), erfolgt ein Abbruch des Sendeversuchs, falls die Verzögerungsdauer noch nicht abgelaufen ist (nein), erfolgt eine Wiederholung der Schritte C und D, also eine wiederholte Sendung eines Widerruftelegramms.

3. Verfahren nach Anspruch 1 oder 2, dadurch gekennzeichnet, daß nach erfolgloser Sendung eines zweiten oder weiteren Datentelegramms in der Rundsteuerzentrale eine Störungsmeldung erfolgt.

## Claims

1. Method
- for transmitting data telegrams from a telecontrol central station to a plurality of substations each containing a telecontrol transmitter, and
- for controlling the telecontrol transmitters to achieve a pulse-synchronised transmission of an audio-frequency telecontrol telegram,
a) a first data telegram being transmitted first of all from the telecontrol central station in multi-point traffic mode to all substations, and triggering there the beginning of a delay period, after the elapse of which the telecontrol telegram is transmitted,
characterized by the following further steps:
b) after transmission of the first data telegram the telecontrol central station asks the substations to confirm the correct reception of the first data telegram (yes); if all substations confirm the reception, there is no further reaction from the telecontrol central station and the telecontrol telegram is transmitted after the delay period has expired;
c) if at least one of these substations does not report confirmation of the reception of the first data telegram (no), the following further procedure is executed:
c1) the telecontrol central station transmits a cancellation telegram already before the delay period has expired, whereupon the running of the delay period is cancelled in the substations where the delay period is running,
c2) the telecontrol central station transmits a second data telegram which triggers the beginning of the delay period again,
c3) the telecontrol central station asks the substations to confirm the correct reception of the second data telegram and omits further reactions if it receives a confirmation (yes) from all substations, so that the telecontrol telegram is transmitted after the delay period has expired;
d) if at least one of the substations does not report confirmation of the reception of the second data telegram (no), the telecontrol central station again transmits a cancellation telegram, whereupon the running of the delay period is cancelled again in the substations, and hence the telecontrol telegram is not transmitted.

2. Method
- for transmitting data telegrams from a telecontrol cental station to a plurality of substations each containing a telecontrol transmitter, and
- for controlling the telecontrol transmitters to achieve a pulse-synchronised transmission of an audio-frequency telecontrol telegram,
A) a data telegram being transmitted first of all from the telecontrol central station in multi-point traffic mode to all substations, and triggering there the beginning of a delay period, after the elapse of which the telecontrol telegram is transmitted,
characterized by the following further steps:
B) after the transmission of a data telegram the telecontrol central station asks the substations to confirm the correct reception of the data telegram; if all substations confirm data telegram reception (yes), there is no further reaction from the telecontrol central station and the telecontrol telegram is transmitted after the delay period has expired;
C) if at least one of the substations does not report confirmation of the reception of the data telegram (no), the following further procedure is executed:
C1) the telecontrol central station transmits a cancellation telegram already before the delay period has expired, whereupon the running of the delay period is cancelled in the substations where the delay period is running,
C2) the telecontrol central station asks the substations to confirm the correct reception of the cancellation telegram,
D) if all substations confirm (yes) the reception of the cancellation telegram, the central station checks whether a predetermined period of time has elapsed yet, if the predetermined period of time has not yet elapsed (no), the transmission attempt is repeated by transmission of a data telegram (step A) and of the interrogation step B; if the predetermined period of time has elapsed (yes), the transmission attempt is aborted;
E) if at least one of the substations does not report confirmation of the reception of the cancellation telegram (result "no" in step C2), the telecontrol central station checks whether the delay period has expired; if the delay period has expired (yes), the transmission attempt is aborted, if the delay period has not yet expired (no), steps C and D are repeated, that is to say transmission of a cancellation telegram is repeated.

3. Method acording to Claim 1 or 2, characterized in that a fault message is issued in the telecontrol central station afer unsuccessful transmission of a second or further data telegram.

## Revendications

1. Procédé
- de transmission de télégrammes de données d'un central de télécommande vers plusieurs postes secondaires qui contiennent chacun un émetteur de télécommande, et
- de commande des émetteurs de télécommande en vue d'obtenir une émission synchrone d'un télégramme de télécommande en fréquence vocale,
a) un premier télégramme de données étant d'abord envoyé par le central de télécommande en diffusion générale à tous les postes secondaires au niveau desquels il déclenche le début d'une période de temporisation, à la fin de laquelle s'effectue l'envoi du télégramme de télécommande,
caractérisé par les étapes supplémentaires suivantes:
b) après l'émission du premier télégramme de données, le central de télécommande demande aux postes secondaires de confirmer la réception correcte du premier télégramme de données (oui); si tous les postes secondaires confirment la réception, il n'y a aucune autre réaction du central de télécommande et, après l'écoulement de la période de temporisation, le télégramme de télécommande est émis;
c) dans le cas où au moins un des postes secondaires ne confirme pas la réception du premier télégramme de données (non), la séquence suivante est exécutée:
c1) le central de télécommande envoie, avant la fin de la période de temporisation, un télégramme d'annulation, à la suite de quoi la période de temporisation est remise à zéro dans les postes secondaires dans lesquels ladite période de temporisation est en cours,
c2) le central de télécommande envoie un second télégramme de données qui déclenche à nouveau le début de la période de temporisation,
c3) le central de télécommande demande aux postes secondaires de confirmer la réception correcte du second télégramme de données et ne déclenche aucune autre réaction s'il reçoit un accusé de réception (oui) de tous les postes secondaires, de sorte qu'à la fin de la période de temporisation l'émission du télégramme de télécommande a lieu;
d) dans le cas où au moins un des postes secondaires ne confirme pas la réception du second télégramme de données (non), le central de télécommande envoie à nouveau un télégramme d'annulation, à la suite de quoi la période de temporisation est à nouveau remise à zéro dans les postes secondaires et l'envoi du télégramme de télécommande n'a donc pas lieu.

2. Procédé
- de transmission de télégrammes de données d'un central de télécommande vers plusieurs postes secondaires qui contiennent chacun un émetteur de télécommande, et
- de commande des émetteurs de télécommande en vue d'obtenir une émission synchrone d'un télégramme de télécommande en fréquence vocale,
A) un télégramme de données étant d'abord envoyé par le central de télécommande en diffusion générale à tous les postes secondaires au niveau desquels il déclenche le début d'une période de temporisation, à la fin de laquelle s'effectue l'envoi du télégramme de télécommande,
caractérisé par les étapes supplémentaires suivantes:
B) après l'émission du télégramme de données, le central de télécommande demande aux postes secondaires de confirmer la réception correcte du télégramme de données; si tous les postes secondaires confirment la réception du télégramme de données (oui), il n'y a aucune autre réaction du central de télécommande et, après l'écoulement de la période de temporisation, le télégramme de télécommande est émis;
C) dans le cas où au moins un des postes secondaires ne confirme pas la réception du télégramme de données (non), la séquence suivante est exécutée:
C1) le central de télécommande envoie, avant la fin de la période de temporisation, un télégramme d'annulation, à la suite de quoi la période de temporisation est remise à zéro dans les postes secondaires dans lesquels ladite période de temporisation est en cours,
C2) le central de télécommande demande aux postes secondaires de confirmer la réception correcte du télégramme d'annulation,
D) dans le cas où tous les postes secondaires confirment la réception du télégramme d'annulation (oui), le central vérifie si un laps de temps prédéterminé est atteint; si le laps de temps prédéterminé n'est pas encore atteint (non), il y a répétition de la tentative d'émission, par envoi d'un télégramme de données (étape A), et de l'étape d'interrogation B; si le laps de temps prédéterminé est atteint (oui), la tentative d'émission est interrompue;
E) dans le cas où au moins un des postes secondaires ne confirme pas la réception du télégramme d'annulation (résultat "non" à l'étape C2), le central de télécommande vérifie si la période de temporisation s'est écoulée; si la période de temporisation s'est écoulée (oui), la tentative d'émission est interrompue; si la période de temporisation ne s'est pas encore écoulée (non), il y a répétition des étapes C et D, c'est-à-dire un nouvel envoi d'un télégramme d'annulation.

3. Procédé selon la revendication 1 ou 2, caractérisé par le fait qu'après l'envoi sans succès d'un deuxième ou d'un autre télégramme de données, un message de perturbation est déclenché dans le central de télécommande.
